# DEMANDE DE BREVET EUROPEEN

(11) **EP 3 018 003 A1**
(43) Date de publication de la demande: **11.05.2016**
(21) Numéro de dépôt: 15193001.3
(22) Date de dépôt: 04.11.2015
(51) Int. Cl.: B60P 7/08

(54) **DISPOSITIF DE MISE SOUS TENSION D'UNE SANGLE COMPORTANT UN MOYEN DE DETECTION DE LADITE TENSION**

(30) Priorité: 06.11.2014 FR 1460746
(71) Demandeur: Abandarat, Driss, 68100 Mulhouse (FR)
(72) Inventeur: Abandarat, Driss, 68100 Mulhouse (FR)
(74) Mandataire: Hege, Frédéric

(57) **Abrégé**

La présente invention concerne un dispositif de mise sous tension d'un élément de traction, tel que par exemple une sangle d'arrimage ou similaire, comportant une embase (40) munie d'un mécanisme d'attache d'une première extrémité dudit élément de traction, et d'un moyen d'enroulement de l'autre extrémité dudit élément de traction, ledit mécanisme d'attache étant fixé sur ladite embase (40) de façon libre en translation par rapport à ladite embase (40), entre une position de tension et une position hors tension, et ladite embase (40) comportant un détecteur (21) apte à détecter la présence ou non d'un niveau de tension prédéterminé entre ladite embase (40) et ledit mécanisme d'attache.

## Description

La présente invention concerne le domaine de l'arrimage de charges notamment par des sangles. Elle concerne plus particulièrement un dispositif de détection de la tension sur une sangle.

Pour arrimer des charges sur un véhicule, chaque sangle est équipée d'un dispositif de mise sous tension, tel que décrit par exemple dans la demande de brevet français n°FR13 54069 déposée par le demandeur.

Un tel dispositif de mise sous tension comporte généralement une base, munie d'un côté d'un axe autour duquel la sangle forme une boucle comme fixation à ladite base, et de l'autre côté un axe d'enroulement, destiné à recevoir l'autre extrémité de la sangle, et de l'enrouler autour dudit axe d'enroulement jusqu'à obtenir la tension souhaitée sur la sangle.

Néanmoins il peut arriver que certaines sangles soient mal tendues lors de leur mise sous tension, ou encore qu'au cours du déplacement du véhicule, la marchandise bouge, produisant une baisse de tension de l'une ou l'autre des sangles. Ceci ne permet plus de garantir une bonne tenue des marchandises transportées.

Le document DE102011056879 propose un dispositif de tension de sangle intégrant un ressort d'accumulation de tension, de sorte que dans un cas tel qu'évoqué ci-dessus, le ressort rend de la tension, et retend les sangles. Toutefois ceci se limite à la valeur de la tension accumulée dans le ressort, et n'offre aucune garantie sur la tension satisfaisante des sangles. En particulier en cas d'acte malveillant, rien n'est prévu pour que le conducteur en soit informé.

Le document FR2995400 propose un dispositif de détection de la tension de chaque sangle. Ceci permet de donner une information au conducteur dès qu'une sangle n'est plus tendue. Mais le dispositif proposé est intégré dans la boucle d'attache de la sangle, et est sujet à des erreurs de mesure dans des cas où la sangle s'appuie contre une marchandise par exemple.

La présente invention a pour but de pallier au moins en partie à ces inconvénients. A cet effet elle propose un dispositif de mise sous tension d'un élément de traction, tel que par exemple une sangle d'arrimage ou similaire, comportant une embase munie d'un mécanisme d'attache d'une première extrémité dudit élément de traction, et d'un moyen d'enroulement de l'autre extrémité dudit élément de traction. Ce dispositif est particulier en ce que ledit mécanisme d'attache est fixé sur ladite embase de façon libre en translation par rapport à ladite embase, entre une position de tension et une position hors tension, et en ce que ladite embase comporte un détecteur apte à détecter la présence ou non d'un niveau de tension prédéterminé entre ladite embase et ledit mécanisme d'attache.

Grâce à ces dispositions, le contrôle devient particulièrement fiable, la mesure ne se faisant plus sur la tension entre la sangle et son mécanisme d'attache, sujet à des erreurs du fait que la sangle est souple, mais sur la tension entre le mécanisme d'attache et l'embase, tous deux rigides, et mobiles selon un déplacement parfaitement contrôlé entre les positions sous tension et hors tension.

Selon d'autres caractéristiques
- ledit mécanisme d'attache peut comprendre un axe, destiné à coopérer avec une boucle fermée de l'extrémité d'un élément de traction pour solidariser ladite extrémité audit mécanisme d'attache, et un cadre en forme de U, fixé à ses extrémités audit axe, et supportant ledit détecteur, et ladite embase comporter une butée fixe, de préférence muni d'un plot de centrage destiné à former le point d'appui pour ledit détecteur ; de telles dispositions permettent de déplacer le point de mesure en un point de l'embase mieux adapté à effectuer une mesure en toute sécurité,
- ladite embase comporte en outre un organe de rappel, de type ressort, tendant à rappeler le mécanisme d'attache vers sa position hors tension, permettant de garantir un retour du mécanisme d'attache vers sa position hors tension,
- ledit détecteur peut être apte à mesurer une valeur de tension, en particulier consister en un capteur de force, par exemple de type piézo-électrique, permettant ainsi une analyse plus fine des évènements que par une mesure exclusivement tout ou rien, liée à une valeur seuil,
- ledit dispositif de mise sous tension peut comporter en outre un boitier de communication amovible, configuré pour pouvoir être fixé sur ledit dispositif de façon à permettre la récupération des mesures du détecteur, et comportant un émetteur configuré pour envoyer sans fil lesdites mesures vers un système distant, permettant ainsi de disposer des informations de contrôle à l'endroit où on choisit de les avoir,
- ledit dispositif peut comporter une poignée, et un mécanisme de transmission du mouvement de ladite poignée vers ledit moyen d'enroulement, ledit moyen d'enroulement étant muni d'un dispositif à cliquet d'enroulement configuré pour permettre la rotation du moyen d'enroulement uniquement dans le sens de l'enroulement, ladite poignée comportant un dispositif à cliquet de poignée configuré pour solidariser la poignée sur le mécanisme de transmission du mouvement uniquement dans le sens de l'enroulement dudit moyen d'enroulement, permettant ainsi un enroulement facile, par un mouvement de va et vient de la poignée,
- ledit dispositif peut comporter en outre une manette de neutralisation du dispositif à cliquet d'enroulement et une manette de neutralisation du dispositif à cliquet de poignée, configurée pour permettre de rabattre la poignée sur l'embase en situation sous tension ; ceci permet en particulier de protéger le détecteur par la poignée,
- ledit dispositif peut comporter un moyen de liaison reliant les deux dites manettes de neutralisation, de sorte que l'actionnement de l'une d'elles entraine l'actionnement de l'autre, ledit moyen de liaison étant actif uniquement lorsque la poignée est rabattue sur l'embase, facilitant ainsi l'opération de désarrimage,
- la manette de neutralisation du cliquet de poignée peut comporter une partie saillante configurée pour s'appuyer sur une partie saillante, ou une arrête, ou s'engager dans une ouverture formant partie femelle de la manette de neutralisation du cliquet d'enroulement, formant ainsi une solution particulièrement robuste et simple pour solidariser les deux manettes de neutralisation de cliquets uniquement en position de poignée rabattue.

L'avantage apporté par la présente invention réside principalement en ce qu'elle propose un dispositif de mise sous tension d'un élément de traction avec un moyen de contrôle de la tension plus fiable, sans risque d'erreurs de mesure liées à la souplesse de l'élément de traction, en particulier la sangle. La sécurité de la mesure est encore accrue avec un mode de réalisation avec poignée rabattable, où la poignée rabattue sur l'embase apporte une sécurité supplémentaire au détecteur.

La présente invention sera mieux comprise à la lecture de la description détaillée qui suit faite en référence aux figures annexées dans lesquelles
- La figure 1 est une vue en coupe d'un dispositif selon l'invention,
- La figure 2 est une vue en coupe de l'embase du dispositif de la fig. 1
- La figure 3 est une vue de face d'un détecteur du dispositif de la fig. 1
- La figure 4 est une vue de côté du détecteur de la fig. 3.
- La figure 5 est une vue schématique d'un boitier de connexion du dispositif de la fig. 1.

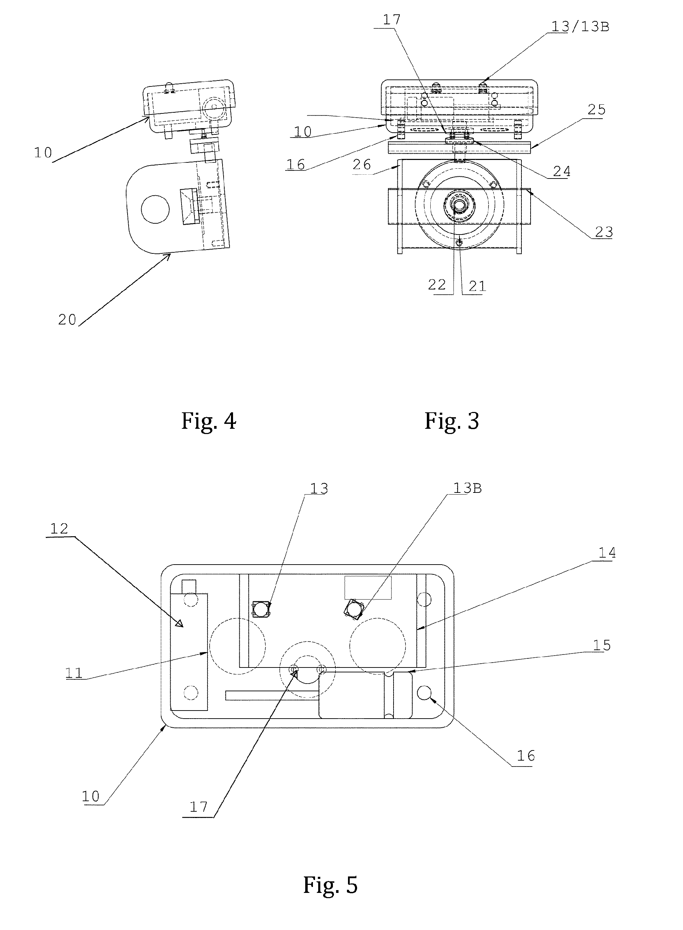

Le dispositif de mise sous tension d'une sangle selon l'invention comporte au moins une embase 40. Celle-ci comporte à l'une de ses extrémités (à gauche sur la fig.) un mécanisme d'attache d'une extrémité de sangle, comportant selon la fig.3 une vis 41, mais qui peut aussi être un simple axe, autour duquel l'extrémité de la sangle (non représentée) peut être disposée sous forme de boucle fermée en vue de sa fixation. L'embase 40 comporte à son autre extrémité un moyen d'enroulement de l'autre extrémité de la sangle, comme par exemple un axe d'enroulement fendu. Le dispositif comporte par ailleurs un moyen de mise en rotation dudit moyen d'enroulement, tel qu'une poignée 30, et d'un moyen de blocage de la rotation, comme par exemple un cliquet, permettant de bloquer l'enroulement lorsque la sangle est tendue. Il comporte en outre une manette de neutralisation du dispositif à cliquet d'enroulement, destinée à être actionnée pour desserrer la sangle.

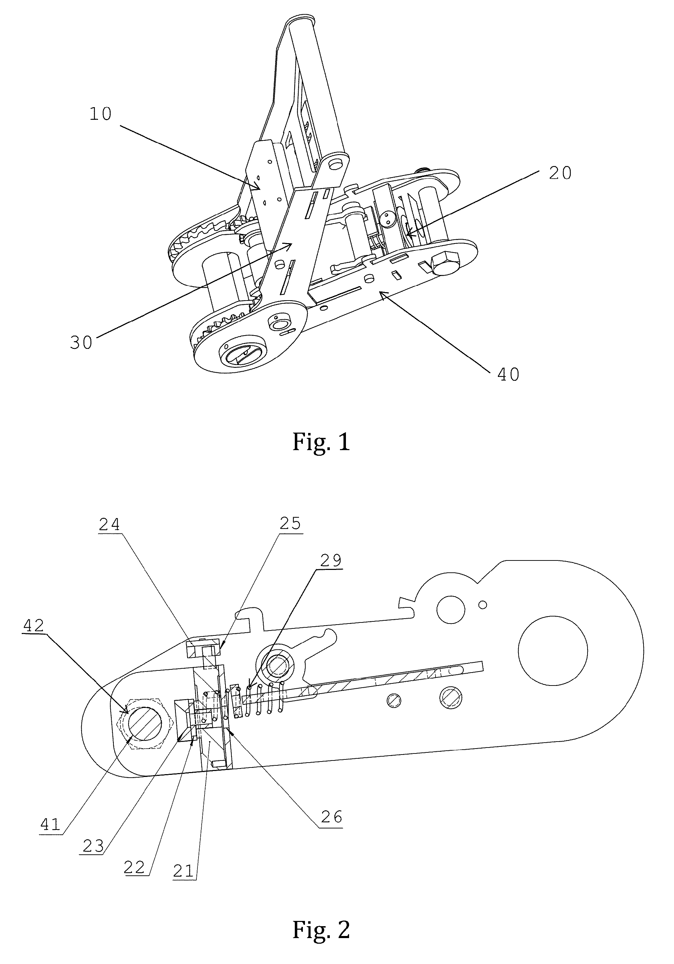

Le dispositif représenté à la fig. 1 montre une poignée 30 comportant une roue dentée, engrenant sur une roue dentée associée à l'axe d'enroulement, ce qui permet à la fois une démultiplication et un changement de sens de l'effort à appliquer. La poignée 30 de la fig. 1 comporte en outre un cliquet de poignée disposé sur un rochet solidaire de ladite roue dentée, permettant un serrage de la sangle par un mouvement de va et vient. Elle comporte enfin une manette de neutralisation du cliquet de poignée, permettant, une fois la sangle tendue, de désengager le cliquet, et de rabattre la poignée 30 sur l'embase 40.

Lorsqu'on veut désarrimer la charge, et donc mettre un dispositif hors tension, il faut neutraliser les deux cliquets.

Le dispositif représenté à la fig 1 prévoit un moyen de liaison entre les deux manettes de neutralisation, dans lequel la manette de neutralisation du cliquet de poignée comporte une partie saillante configurée pour s'appuyer sur une partie saillante, ou une arrête, ou s'engager dans une ouverture formant partie femelle de la manette de neutralisation du cliquet d'enroulement, et ainsi l'entrainer dans un même mouvement et produire la neutralisation conjointe des deux cliquets.

Ce mode de réalisation est développé avec plus de détails dans la demande de brevet du présent demandeur, n°FR1354069, et constitue un mode de réalisation adapté pour la présente invention. Mais il est clair que d'autres modes de réalisation du dispositif de mise sous tension d'une sangle sont possibles, comme par exemple avec une poignée se prenant directement sur l'axe d'enroulement.

Selon un mode préféré de réalisation de l'invention, le mécanisme d'attache comprend un axe 41 sur lequel vient se fixer un cadre 26 en forme de U par ses deux pattes. Ce cadre 26 est disposé mobile en translation sur l'embase 40, l'axe 41 pouvant quant à lui se déplacer dans deux trous oblongs 42 pratiqués à cet effet dans les parois latérales de l'embase 40. Un ressort 29 peut être disposé sur l'embase 40 de sorte à exercer un effort de rappel sur le cadre 26 vers sa position hors tension, vers la droite selon la fig. 2. En disposant l'axe 41 en forme de vis, on obtient un mode de fixation très simple entre ladite vis 41 et le cadre 26.

Un détecteur 21, par exemple un capteur de force, est fixé sur le cadre 26, par exemple au niveau du milieu de la barre de liaison du U. Ce capteur de force 21 vient s'appuyer sur une butée fixe 23 disposée sur l'embase 40. Un plot de centrage 22 muni d'une face d'appui permet de s'assurer du bon contact d'appui entre le capteur de force 21 et la butée fixe 23.

D'autres modes de réalisation peuvent être envisagés. Par exemple, le capteur de force 21 pourrait être remplacé par un capteur de position, détectant que le mécanisme d'attache est en position sous tension, ou en position hors tension. Un détecteur de présence peut être disposé sur une jambe du cadre 26, ou encore sur l'axe 41, et être devant un drapeau fixe en position sous tension, et à côté dudit drapeau en position hors tension. Ou plus simplement encore, un repère en couleur solidaire du mécanisme d'attache peut passer devant une lumière fixe par rapport à l'embase 40, et la vue de la couleur indiquer une position sous tension. Cela oblige le conducteur du véhicule à observer chaque dispositif pour savoir s'il est bien sous tension, mais est néanmoins un dispositif fiable de détection. Dans de tels cas le ressort 29 permet de garantir que le mécanisme d'attache revient bien à sa position hors tension dès que la tension baisse en dessous d'un seuil prédéterminé. Quand la mesure porte sur la contrainte présente entre le mécanisme d'attache et l'embase 40, on peut se passer de ressort.

Le cadre 26 en forme de U permet de déplacer le point d'application de l'effort vers une position adaptée de la butée fixe 23. Mais une solution dans laquelle l'axe 41 supporte directement le détecteur 21, lequel s'appuie sur une partie fixe de l'embase 40 ne sortirait pas du cadre de la présente invention.

Selon un mode particulier de réalisation de l'invention, une broche fixe 25 est disposée sur le dispositif de mise sous tension, apte à recevoir une broche de connexion femelle 24 qui établit le lien avec un boitier de communication 10.

Ce boitier de communication 10 comporte selon ce mode particulier de réalisation un aimant 11, permettant le maintien sur la poignée 30 lors de sa mise en place, une pile d'alimentation 12, des alarmes 13, 13B pouvant être des led et/ou des systèmes sonores, et permettant de prévenir le conducteur ou tout autre opérateur d'un défaut de tension. Il comprend en outre un circuit imprimé 14 spécialement conçu pour commander diverses fonctions d'émission, d'alarme 13, 13B ou autre, et un émetteur 15, radio, ou autre liaison sans fil tel que Bluetooth.

Le boitier comprend enfin des plots de positionnement 16 et une broche de connexion mâle 17, destinée à coopérer avec la broche de connexion femelle 24 de la broche fixe.

Si le dispositif de mise sous tension est disposé selon le mode de réalisation décrit ci-dessus, avec une poignée 30 rabattable sur l'embase 40 lorsque la sangle est tendue, on peut fixer le boitier de communication 10 sur la poignée 30

(voir fig. 1), de telle façon que la broche de connexion mâle 17 s'engage dans la broche de connexion femelle 24 située sur l'embase 40 en position poignée 30 rabattue.

Le boitier de communication peut alors transmettre à distance une information de type tout ou rien, sangle sous tension ou non, ou encore une information de la valeur de la tension mesurée, si le détecteur 21 est configuré pour donner une telle information.

Lors de la mise sous tension d'une sangle, on peut alors opérer de la manière suivante :
Une fois la sangle mise sous tension avec une force estimée correcte par un utilisateur, le dispositif de mise sous tension peut être mis en position "route", le dispositif étant alors verrouillé dans cette position, par exemple par un cliquet engagé dans une roue dentée solidaire du moyen d'enroulement.

L'utilisateur, peut à ce moment là, mettre le boitier de communication 10, en place sur la poignée 30 du dispositif, après avoir rabattu la poignée 30 sur l'embase 40.

Lors de la mise en place du boitier de communication 10 sur la poignée 30, celui-ci est guidé par les plots de positionnement 16, la broche de connexion mâle 17 se retrouvant en place pour la liaison avec la broche de connexion femelle 24.

La valeur mesurée par le capteur de force 21 est alors récupérée et peut être transmise à un récepteur situé à distance, par exemple dans la cabine du conducteur du véhicule, ou encore au siège de l'entreprise.

De plus cette force peut servir de référence, permettant la détection de toute variation de tension dans la sangle en plus ou en moins.

L'utilisateur sera ainsi informé de toute perte de tension dans la sangle, et sera prévenu de l'imminence d'un problème de maintien de la charge. Il peut alors s'arrêter afin de vérifier l'arrimage de la charge, avant qu'il ne soit trop tard. Ayant en plus l'information précise lui disant quel dispositif a subi cette variation, il lui est facile d'y remédier rapidement.

La même détection permettra aussi, en cas d'augmentation de la tension de la sangle, de détecter tout mouvement suspect du chargement, pouvant être lié a un mauvaise arrimage (une mauvaise répartition) ou a une mauvaise conduite du chauffeur entrainant des déplacements de charges anormaux. Le chauffeur peut alors, soit corriger son mode de conduite, soit s'arrêter rapidement si la mesure n'est pas redevenue normale.

En outre, si une sangle est restée en surtension à l'arrivée sur le lieu de déchargement, cela peut signifier que le matériel arrimé a bougé ce qui implique un risque d'accident par chute du matériel au moment du désarrimage. Le conducteur est prévenu de ce risque, et peut donc contrôler le chargement et prendre toute précaution nécessaire avant de désarrimer la charge. On peut ainsi éviter des accidents pouvant être mortels par chute de la charge sur un opérateur.

On peut prévoir aussi des paliers de perte et d'augmentation de tension, avec des messages associés, comme par exemple :
- légère perte de tension, simple alerte ;
- perte de danger importante, danger, s'arrêter rapidement ;
- légère surtension, simple alerte
- surtension importante, indiquant que la marchandise a bougé, s'arrêter rapidement ;
- d'autres paliers peuvent être introduits.

Le transfert d'information du capteur de force 21 peut être envoyé au récepteur, se trouvant dans la cabine du chauffeur, et qui peut être muni d'un logiciel de traitement des informations transmises, et de sauvegarde, avec une mémorisation par exemple d'un mois d'utilisation et de rapports.

Le récepteur peut à son tour retransmettre ces informations à un smartphone ou une tablette, suivant l'équipement de l'utilisateur, celui-ci restant ainsi informé de l'état de tension, même a distance (par exemple s'il est éloigné du véhicule, dans un restaurant ou un hôtel). On sécurise ainsi le chargement, même contre des tentatives de vol.

En parallèle l'information peut être transmise au siège de l'entreprise, permettant un suivi du parc, et avec la possibilité de connaitre toutes les étapes du trajet de la marchandise dans les conditions et en temps réels.

Un rapport peut être récupéré en fin de trajet pour faire un bilan précis avec toutes les données concernant l'arrimage pendant le transfert.

Le récepteur dans la cabine du chauffeur peut être muni d'un GSM pour transmission des informations, et d'un port USB pour réception des rapports.

Ce rapport pourra de plus être transmis à tout organisme (assurances, police..) en cas d'incidents lors du trajet afin de contribuer à définir les responsabilités de chacun (mauvaise conduite, mauvais arrimage, défaillance matérielle etc., ...).

Ces informations pourront aussi être utilisées, sans obligation d'incidents, par d'autres organismes, tel qu'un centre de formation, permettant ainsi de pouvoir expliquer et corriger tout problème pouvant être rencontré par une utilisation, grâce au rapport précis du système donnant toutes les phases de la conduite (freinage, virage a vitesse élevée, mouvement de marchandises, ...). On peut ainsi utiliser les informations pour illustrer une formation à l'arrimage et à la conduite d'un véhicule chargé, par de bons et de mauvais exemples d'arrimage et de conduite.

On peut aussi utiliser ces informations en cas d'accident, pour aider à définir les responsabilités quant à la conduite, à l'arrimage, et autre.

## Revendications

1. Dispositif de mise sous tension d'un élément de traction, tel que par exemple une sangle d'arrimage ou similaire, comportant une embase (40) munie d'un mécanisme d'attache d'une première extrémité dudit élément de traction, et d'un moyen d'enroulement de l'autre extrémité dudit élément de traction, **caractérisé en ce que** ledit mécanisme d'attache est fixé sur ladite embase (40) de façon libre en translation par rapport à ladite embase (40), entre une position de tension et une position hors tension, et **en ce que** ladite embase (40) comporte un détecteur (21) apte à détecter la présence ou non d'un niveau de tension prédéterminé entre ladite embase (40) et ledit mécanisme d'attache.

2. Dispositif selon la revendication précédente, dans lequel ledit mécanisme d'attache comprend un axe (41), destiné à coopérer avec une boucle fermée de l'extrémité d'un élément de traction pour solidariser ladite extrémité audit mécanisme d'attache, et un cadre (26) en forme de U, fixé à ses extrémités audit axe (41), et supportant ledit détecteur (21), et en ce que ladite embase (40) comporte une butée fixe (23), de préférence muni d'un plot de centrage (22) destiné à former le point d'appui pour ledit détecteur (21).

3. Dispositif selon l'une des revendications précédentes, dans lequel ladite embase (40) comporte en outre un organe de rappel (29), de type ressort, tendant à rappeler le mécanisme d'attache vers sa position hors tension.

4. Dispositif selon l'une des revendications précédentes, dans lequel ledit détecteur (21) est apte à mesurer une valeur de tension, en particulier consiste en un capteur de force, par exemple de type piézo-électrique.

5. Dispositif selon l'une des revendications précédentes, comportant en outre un boitier de communication amovible, configuré pour pouvoir être fixé sur ledit dispositif de façon à permettre la récupération des mesures du détecteur (21), et comportant un émetteur (15) configuré pour envoyer sans fil lesdites mesures vers un système distant.

6. Dispositif selon l'une des revendications précédentes, comportant une poignée (30), et un mécanisme de transmission du mouvement de ladite poignée (30) vers ledit moyen d'enroulement, ledit moyen d'enroulement étant muni d'un dispositif à cliquet d'enroulement configuré pour permettre la rotation du moyen d'enroulement uniquement dans le sens de l'enroulement, ledit mécanisme de transmission du mouvement comportant un dispositif à cliquet de poignée configuré pour solidariser la poignée (30) sur le mécanisme de transmission du mouvement uniquement dans le sens de l'enroulement dudit moyen d'enroulement.

7. Dispositif selon la revendication précédente, comportant en outre une manette de neutralisation du dispositif à cliquet d'enroulement et une manette de neutralisation du dispositif à cliquet de poignée, configurée pour permettre de rabattre la poignée (30) sur l'embase (40) en situation sous tension.

8. Dispositif selon la revendication précédente, comportant un moyen de liaison reliant les deux dites manettes de neutralisation, de sorte que l'actionnement de l'une d'elles entraine l'actionnement de l'autre, ledit moyen de liaison étant actif uniquement lorsque la poignée (30) est rabattue sur l'embase (40).

9. Dispositif selon la revendication précédente, dans lequel la manette de neutralisation du cliquet de poignée comporte une partie saillante configurée pour s'appuyer sur une partie saillante, ou une arrête, ou s'engager dans une ouverture formant partie femelle de la manette de neutralisation du cliquet d'enroulement.

10. Dispositif selon l'une des revendications 5 et 7 ou 8, dans lequel ledit boitier de communication est fixé sur ladite poignée (30), en particulier par le moyen d'aimants (11).
